## Europäisches Patentamt
## European Patent Office
## Office européen des brevets

(19)

(11) Veröffentlichungsnummer: **0 016 472**
**B1**

(12)

# EUROPÄISCHE PATENTSCHRIFT

(45) Veröffentlichungstag der Patentschrift:
**28.09.83**

(51) Int. Cl.³: **H 04 B 3/03**, H 04 B 12/02,
H 04 L 25/22

(21) Anmeldenummer: **80101510.8**

(22) Anmeldetag: **21.03.80**

(54) Anordnung mit einer Gabelschaltung für den Zweidraht-Vierdraht-Übergang in PCM-Zeitmultiplexsystemen.

(30) Priorität: **26.03.79 DE 2911866**

(43) Veröffentlichungstag der Anmeldung:
**01.10.80 Patentblatt 80/20**

(45) Bekanntmachung des Hinweises auf die Patenterteilung:
**28.09.83 Patentblatt 83/39**

(84) Benannte Vertragsstaaten:
**AT CH DE FR GB IT NL SE**

(56) Entgegenhaltungen:
**DE-A-2 300 318**
**US-A-3 855 431**
**US-A-3 903 378**
**US-A-4 074 087**

(73) Patentinhaber: **SIEMENS AKTIENGESELLSCHAFT,
Berlin und München Wittelsbacherplatz 2,
D-8000 München 2 (DE)**

(72) Erfinder: **Lechner, Robert, Dipl.-Ing., Haidfeldstrasse 5,
D-8156 Otterfing (DE)**

### Anordnung mit einer Gabelschaltung
### für den Zweidraht-Vierdraht-Übergang in PCM-Zeitmultiplexsystemen

Die Erfindung betrifft eine Anordnung mit einer Gabelschaltung für den Zweidraht-Vierdraht-Übergang in PCM-Zeitmultiplexsystemen, die auf der Zweidrahtseite mit einer Speisebrücke zusammengeschaltet ist, deren resultierender ohmscher Speisewiderstand und diesem parallelgeschalteter Kondensator zwischen den beiden gleichgroßen zweidrahtseitigen Teilwicklungen des Gabelübertragers in Reihe geschaltet sind und die mit einer Vierdrahtleitung verbunden sind, in deren Empfangszweig ein Tiefpaßfilter mit vernachlässigbarer Ausgangsimpedanz und in deren Sendezweig ein Tiefpaßfilter mit hoher Eingangsimpedanz liegt, wobei die Filter vorzugsweise das Empfangs- bzw. Sendefilter einer Anordnung zur Digital-Analog-Wandlung bzw. Analog-Digital-Wandlung sind.

Insbesondere, wenn solche Anordnungen Bestandteil von Teilnehmeranschlußschaltungen in PCM-Systemen sind, wird gefordert, daß einerseits der technische Aufwand möglichst gering ist, andererseits sehr gute übertragungstechnische Eigenschaften gewährleistet sind.

Ein Nachteil bekannter Gabelübertrager liegt darin, daß die Stoßreflektion an der Zweidrahtseite nicht reell ist, so daß die Gabel eine frequenzabhängige Einfügungsdämpfung bedingt, was unerwünscht ist. Es ist also ein reeller Eingangswiderstand auf der Zweidrahtseite der Gabel im Sprachfrequenzbereich anzustreben, wobei jedoch der Gabelübertrager sehr kleine Abmessungen aufweisen soll.

Bei bekannten Gabelschaltungen ist auf der Vierdrahtseite eine Leitungsnachbildung vorhanden, die u. a. eine Spule aufweist, was ebenfalls aus Kosten- und Raumgründen unerwünscht ist. Sofern Übertrager mit kleinen Kernen verwendet werden, weisen solche bekannten Gabelschaltungsanordnungen auf der Vierdrahtseite zwei Kondensatoren und als Bestandteil der Speisebrücke auf der Zweidrahtseite einen Kondensator auf, die jeweils relativ hohe Kapazitätswerte haben und damit sich in integrierter Schaltkreistechnik relativ schlecht realisieren lassen.

Aufgabe der vorliegenden Erfindung ist es daher, bei einer insbesondere als Bestandteil von Teilnehmeranschlußschaltungen vorkommenden Anordnung mit einer Gabelschaltung, wie sie eingangs geschildert wurde, bei der also die Zweidrahtseite des Gabelübertragers in die Teilnehmerspeisung einbezogen ist und bei der auf der Vierdrahtseite Tiefpaßfilter vorgesehen sind, die insbesondere Sende- bzw. Empfangsfilter von Anordnungen zur Digital-Analog-Wandlung bzw. Analog-Digital-Wandlung darstellen, zu erreichen, daß bei guten übertragungstechnischen Eigenschaften der Eingangswiderstand auf der Zweidrahtseite im Sprachfrequenzbereich reell ist, der Gabelübertrager dabei jedoch kleine Abmessungen aufweist, auf der Vierdrahtseite zur Leitungsnachbildung auf eine Spule verzichtet werden kann und ebenfalls auf der Vierdrahtseite Kondensatoren entfallen.

Erfindungsgemäß wird diese Aufgabe bei einer Anordnung der eingangs erwähnten Art dadurch gelöst, daß für die Gesamtinduktivität L1,2 der zweidrahtseitigen Gabelübertragerwicklungen, für den Widerstandswert des resultierenden Speisebrückenwiderstandes RS und für die Kapazität des Speisebrückenkondensators CS die Beziehung

$$L1,2 = CS \cdot RS^2$$

gilt, daß der Verbindungspunkt der beiden vierdrahtseitigen Gabelübertragerwicklungen direkt oder über einen reellen Widerstand an einen Erdpotential führenden Schaltungspunkt gelegt ist, daß der Empfangszweig der Vierdrahtleitung mit einem ohmschen Widerstand abgeschlossen ist, dessen Widerstandswert mit demjenigen des Speisebrückenwiderstandes RS, den Windungszahlen der zweidrahtseitigen Gabelübertragerwicklungen w1, w2, der Windungszahl der im Empfangszweig der Vierdrahtleitung liegenden Gabelübertragerwicklung w3 und dem ohmschen Widerstand Rw3 dieser Wicklung in der Beziehung

$$RA = RS \cdot (w3/(w1 + w2))^2 - Rw3$$

steht, und daß das Signal des im Empfangszweig der Vierdrahtleitung liegenden Tiefpasses mit dem Signal, das am der Erdpotentialseite abgewendeten Ende der im Sendezweig der Vierdrahtleitung liegenden Wicklung des Gabelübertragers auftritt, in einer Vierpolschaltung, die gebildet wird aus zwei ohmschen Widerständen, deren eine Anschlüsse die empfangszweigseitigen bzw. sendezweigseitigen Schaltungseingänge darstellen, und einem Kondensator, der die beiden anderen Anschlüsse der Widerstände verbindet, wobei der andere Anschluß des den sendezweigseitigen Eingang bildenden Widerstandes einen mit einem Eingang des sendeseitigen Tiefpasses verbundenen Ausgang bildet, zu einem Ausgangssignal überlagert wird, das als Eingangssignal für den im Sendezweig der Vierdrahtleitung liegenden Tiefpaß dient, wobei die Bestandteile der Vierpolschaltung so bemessen sind, daß unter Betriebsbedingungen dessen Ausgangssignal, soweit es allein aufgrund des erwähnten Ausgangssignals des empfangsseitigen Tiefpasses entsteht, der geforderten Gabeldämpfung entsprechend klein ist, und daß die in den Vierdrahtleitungszweigen liegenden Tiefpässe derart bemessen sind, daß sie durch die Gabelschaltung bedingten Dämpfungsverzerrungen ausgleichen.

Auf diese Art und Weise ist der Eingangswiderstand der Gabelschaltung auf der Zweidrahtseite unabhängig vom Verhältnis L12/CS der Gesamtinduktivität der Gabelübertragerwicklungen auf der Zweidrahtseite und der Kapazität des Speisebrückenkondensators, so daß ein entsprechend kleiner Übertrager mit entsprechend kleiner Induktivität L12 Verwendung finden kann. Eine derartige Verringerung der Induktivität hat über die Verringerung der Baugröße hinaus auch noch den Vorteil, daß der ohmsche Wicklungswiderstand klein gehalten wird und damit die Temperaturabhängigkeit der Anordnung vernachlässigbar klein gemacht werden kann. Darüber hinaus ist erreicht, daß eine Leitungsnachbildung mit induktivitätsbehafteter Spule entfällt. Dennoch wird mit Hilfe des erfindungsgemäß eingesetzten Vierpols, der, wie erwähnt, lediglich ohmsche Widerstände und gegebenenfalls einen oder mehrere Kondensatoren enthält, eine Dämpfung der vom Empfangszweig der Vierdrahtleitung zum Sendezweig der Vierdrahtleitung übergekoppelten Signalenergie erreicht, die mindestens genau so gut ist wie bei Gabelschaltungen, die eine unter Verwendung einer Spule aufgebaute Leitungsnachbildung aufweisen. Ein verbleibender Frequenzgang der Fehlerdämpfung ist erfindungsgemäß durch entsprechende Dimensionierung der Tiefpässe kompensiert, ohne daß hierzu besondere Kosten aufzuwenden sind, da, wie erwähnt, die Tiefpässe in dem vorausgesetzten Anwendungsfall sowieso vorhanden sind.

Bei einer ersten Ausführungsform der Erfindung liegt der Abschlußwiderstand des Empfangszweiges der Vierdrahtleitung zwischen dem Ausgang des empfangszweigseitigen Tiefpasses und der empfangszweigseitigen Wicklung des Gabelübertragers, wobei die beiden vierdrahtseitigen Gabelübertragerwicklungen gleiche Windungszahlen aufweisen.

Gemäß einer weiteren Ausgestaltung der Erfindung liegt der Abschlußwiderstand des Empfangszweiges der Vierdrahtleitung zwischen dem Verbindungspunkt der beiden vierdrahtseitigen Wicklungen des Gabelübertragers und einem Erdpotential führenden Schaltungspunkt, in welchem Fall die Windungszahl der sendezweigseitigen Gabelübertragerwicklung größer als diejenige der empfangszweigseitigen Gabelübertragerwicklung ist. Diese Ausführungsform ist bezüglich der Dämpfung der von der Zweidrahtleitung zum Sendezweig der Vierdrahtleitung übertragenen Signalenergie besonders günstig.

Die erwähnte Vierpolschaltung ist gemäß weiterer Ausgestaltung der Erfindung aus zwei ohmschen Widerständen, deren eine Anschlüsse die Schaltungseingänge darstellen, und aus einem Kondensator gebildet, der die beiden anderen Anschlüsse der Widerstände verbindet, wobei der andere Anschluß des am Sendezweigeingangvierpols liegenden Widerstandes den Ausgang des Vierpols bildet. Diese Vierpolschaltung kann gemäß noch einer anderen Ausgestaltung der Erfindung zusammen mit dem im Sendezweig der Vierdrahtleitung liegenden Tiefpaß zu einer Baueinheit vereinigt sein.

Nachstehend wird die Erfindung anhand von Ausführungsbeispielen unter Bezugnahme auf die Zeichnung näher erläutert. In der Zeichnung zeigen

Fig. 1 und 2 zwei Ausführungsbeispiele der erfindungsgemäßen Schaltungsanordnung,

Fig. 3 ein Ausführungsbeispiel der in den Anordnungen gemäß Fig. 1 oder 2 vorgesehenen Vierpolschaltung.

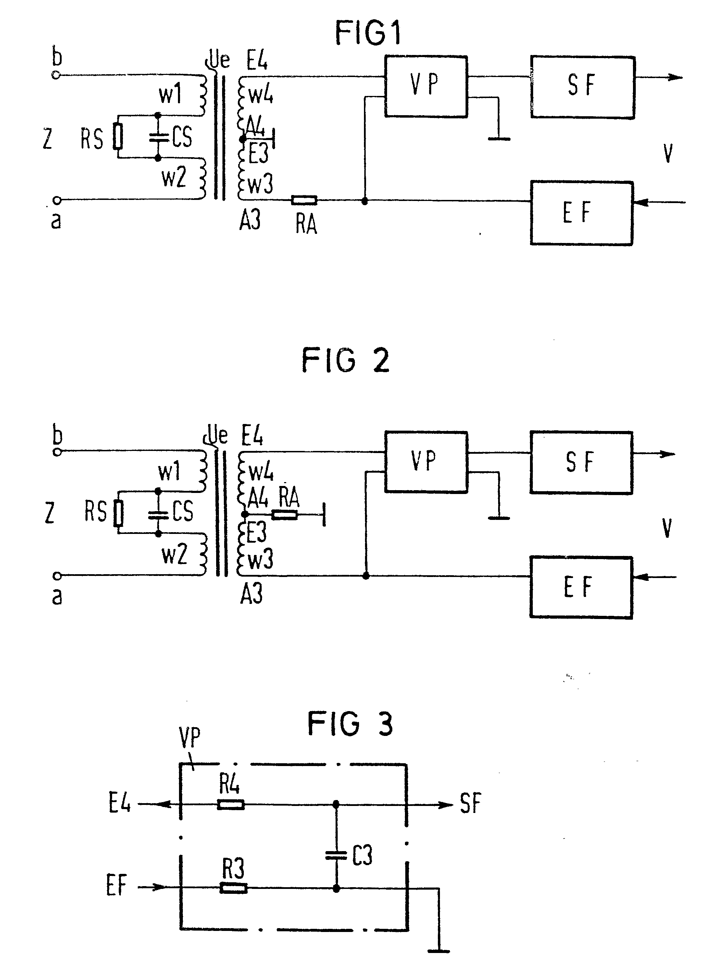

Die in Fig. 1 dargestellte Anordnung ist beispielsweise Bestandteil einer Teilnehmeranschlußleitung, die über eine Zweidrahtleitung Z, die die Leitungsadern a und b aufweist, mit einer Fernsprechteilnehmerstation verbindbar ist. Zur Speisung dieser Teilnehmerstation dient eine Speisebrücke, von der hier der resultierende Speisewiderstand RS und ein ihm parallelgeschalteter Kondensator CS dargestellt sind. Diese Parallelschaltung ist zwischen den Wicklungen w1 und w2 angeordnet und zu diesen in Reihe geschaltet. Die Wicklungen stellen die zweidrahtseitigen Wicklungen eines Gabelübertragers Ue dar. Die vierdrahtseitigen Wicklungen w3 und w4 des Gabelübertragers sind an ihrem Verbindungspunkt E3/A4 an Erdpotential gelegt und liegen im Falle der Wicklung w3 im Empfangszweig einer Vierdrahtleitung V und im Falle der Wicklung w4 im Sendezweig dieser Vierdrahtleitung.

Zwischen der Gesamtinduktivität der zweidrahtseitigen Wicklungen w1 und w2, dem Widerstandswert des resultierenden Speisebrückenwiderstandes RS und der Kapazität des Speisebrückenkondensators CS gilt die Beziehung $L1,2 = CS \cdot RS^2$.

Im erwähnten Empfangszweig der Vierdrahtleitung V liegt ein Empfangstiefpaß EF, dessen Ausgangsimpedanz vernachlässigbar klein ist, sowie ein Widerstand RA. Der Widerstandswert dieses Widerstandes steht mit dem Widerstandswert des resultierenden Speisebrückenwiderstandes RS, den Windungszahlen der zweidrahtseitigen Gabelübertragerwicklungen w1, w2, der Windungszahl der im Empfangszweig der Vierdrahtleitung liegenden Gabelübertragerwicklung w3 und dem ohmschen Widerstand Rw3 dieser Wicklung in der Beziehung

$$RA = RS \cdot (w3/(w1+w2))^2 - Rw3.$$

Im Sendezweig der Vierdrahtleitung V liegt der Sendetiefpaß SF, dessen Eingangswiderstand hochohmig ist.

Der Ausgang des im Empfangszweig der Vierdrahtleitung V liegenden Tiefpasses EF sowie das Ende E4 der Wicklung w4 sind an jeweils einen anderen der beiden Eingänge einer Vierpolschaltung VP angeschlossen, deren Ausgangsanschlüsse einerseits an Erdpotential gelegt, andererseits mit dem Eingangsanschluß des Sendetiefpasses SF verbunden sind.

Wie die Fig. 3 zeigt, kann diese Vierpolschaltung in Form von zwei Widerständen R3 und R4 und eines Kondensators C3 aufgebaut sein, wobei der eine Anschluß des Widerstandes R3 an den Ausgang des Empfangstiefpasses EF und der eine Anschluß des Widerstandes R4 an das Ende E4 der Wicklung w4 angeschlossen ist, also die beiden Eingänge der Vierpolschaltung bilden, und der Kondensator C3 die beiden anderen Anschlüsse der Widerstände überbrückt und wobei der Verbindungspunkt des einen Anschlusses des Widerstandes R4 mit der einen Belegung des Kondensators C3 denjenigen Ausgangsanschluß der Vierpolschaltung bildet, der mit dem Eingang des Sendetiefpasses SF in Verbindung steht.

Das am Ausgang des Empfangstiefpasses EF auftretende Signal, das auch an den einen Eingang der Vierpolschaltung VP gelangt, ist gegenüber dem aufgrund eines solchen Empfangssignals am Ende E4 der Wicklung w4 auftretenden Signal, das dem anderen Eingang der Vierpolschaltung zugeführt wird, um etwa 180 Grad in der Phase gedreht. Die Widerstandswerte der Widerstände R3 und R4 sowie der Kapazitätswert des Kondensators C3 werden nun derart bemessen, daß das aufgrund der Überlagerung der beiden erwähnten Signale am Ausgang der Vierpolschaltung auftretende und damit auf den Sendezweig der Vierdrahtleitung gelangende Signal der gewünschten Fehlerdämpfung entsprechend klein ist. Der zum Widerstand R3 in Reihe liegende Kondensator C3 in der Vierpolschaltung VP gewährleistet hierbei, daß die Fehlerdämpfung der Gabelschaltungsanordnung im ganzen Sprachbereich konstant bleibt.

Beim Ausführungsbeispiel gemäß Fig. 2 ist der Abschlußwiderstand Ra zwischen dem Verbindungspunkt der vierdrahtseitigen Gabelübertragerwicklungen w3, w4 und einem an Erdpotential liegenden Schaltungspunkt eingefügt. Die Windungszahl der im Sendezweig der Vierdrahtleitung liegenden Wicklung w4 ist in diesem Fall größer als diejenige der im Empfangszweig liegenden Wicklung w3, es gilt etwa w4 = 1,2 · w3. Es tragen hier beide Wicklungen w3 und w4 für die Signalübertragung von der Zweidrahtleitung zum Sendezweig der Vierdrahtleitung bei, weswegen die Dämpfung bei dieser Art der Signalübertragung geringer ist als beim Ausführungsbeispiel gemäß Fig. 1. Außerdem ist das am Wicklungsende E4 auftretende Signal, das aufgrund eines über den Empfangszweig der Vierdrahtleitung an das Wicklungsende A3 gelangende Signal entsteht, kleiner, so daß der Widerstand R4 des Vierpols, der, wie erläutert, im Zusammenhang mit der Erzielung einer ausreichend hohen Fehlerdämpfung eine Rolle spielt, kleiner sein kann als beim Ausführungsbeispiel gemäß Fig. 1. Die Signalenergie, die von der Zweidrahtleitung zum Sendezweig der Vierdrahtleitung übertragen wird und die diesen Vierpol ebenfalls zu durchlaufen hat, wird daher auch aus diesem Grunde weniger bedämpft als beim vorbeschriebenen Ausführungsbeispiel.

**Patentansprüche**

1. Anordnung mit einer Gabelschaltung für den Zweidraht-Vierdraht-Übergang in PCM-Zeitmultiplexsystemen, die auf der Zweidrahtseite mit einer Speisebrücke zusammengeschaltet ist, deren resultierender ohmscher Widerstand (RS) und diesem parallelgeschalteter Kondensator (CS) zwischen den beiden gleich großen zweidrahtseitigen Teilwicklungen (w1, w2) des Gabelübertragers (Ue) in Reihe geschaltet sind und die mit einer Vierdrahtleitung verbunden sind, in deren Empfangszweig ein Tiefpaßfilter (EF) mit vernachlässigbarer Ausgangsimpedanz und in deren Sendezweig ein Tiefpaßfilter (SF) mit hoher Eingangsimpedanz liegt, wobei die Filter vorzugsweise das Empfangs- bzw. Sendefilter einer Anordnung zur Digital-Analog-Wandlung bzw. Analog-Digital-Wandlung sind, dadurch gekennzeichnet, daß für die Gesamtinduktivität (L1,2) der zweidrahtseitigen Gabelübertragerwicklungen (w1, w2) für den Widerstandswert des resultierenden Speisebrückenwiderstandes (RS) und für die Kapazität des Speisebrückenkondensators (CS) die Beziehung

$$L1,2 = CS \cdot RS^2$$

gilt, daß der Verbindungspunkt der beiden vierdrahtseitigen Gabelübertragerwicklungen (w3, w4) direkt oder über einen reellen Widerstand an einen Erdpotential führenden Schaltungspunkt gelegt ist, daß der Empfangszweig der Vierdrahtleitung mit einem ohmschen Widerstand (RA) abgeschlossen ist, dessen Widerstandswert mit demjenigen des Speisebrückenwiderstandes (RS), den Windungszahlen der zweidrahtseitigen Gabelübertragerwicklungen (w1, w2), der Windungszahl der im Empfangszweig der Vierdrahtleitung liegenden Gabelübertragerwicklung (w3) und dem ohmschen Widerstand (Rw3) dieser Wicklung in der Beziehung

$$RA = RS \cdot (w3/(w1 + w2))^2 - Rw3$$

steht, und daß das Signal des im Empfangszweig der Vierdrahtleitung liegenden Tiefpasses (EF) mit dem Signal, das am der Erdpotentialseite abgewendeten Ende der im Sendezweig der Vierdrahtleitung liegenden Wicklung (w4) des Gabelübertragers (Ue) auftritt, in einer Vierpolschaltung, die gebildet wird aus zwei ohmschen Widerständen (R3, R4), deren eine Anschlüsse die empfangszweigseitigen bzw. sendezweigseitigen Schaltungseingänge darstellen, und einem Kondensator (C3), der die beiden anderen Anschlüsse der Widerstände verbindet, wobei der andere Anschluß des den sendezweigseitigen Eingang bildenden Widerstandes (R4) eine mit dem Eingang des sendeseitigen Tiefpasses (SF) verbundenen Ausgang bildet, zu einem Ausgangssignal überlagert wird, das als Eingangssignal für den im Sendezweig der Vierdrahtleitung liegenden Tiefpaß (SF) dient, wobei die Bestandteile der Vierpolschaltung so bemessen sind, daß unter Betriebsbedingungen dessen Ausgangssignal, soweit es allein aufgrund des erwähnten Ausgangssignals des empfangsseitigen Tiefpasses (EF) entsteht, der geforderten Gabeldämpfung entsprechend klein ist, und daß die in den Vierdrahtleitungszweigen liegenden Tiefpässe (EF, SF) derart bemessen sind, daß sie die durch die Gabelschaltung bedingten Dämpfungsverzerrungen ausgleichen.

2. Anordnung nach Anspruch 1, dadurch gekennzeichnet, daß der Abschlußwiderstand (RA) des Empfangszweiges der Vierdrahtleitung zwischen dem Ausgang des empfangsseitigen Tiefpasses (EF) und der empfangsseitigen Wicklung (w3) des Gabelübertragers (Ue) liegt, und daß die beiden vierdrahtseitigen Gabelübertragerwicklungen (w3, w4) gleiche Windungszahlen aufweisen.

3. Anordnung nach Anspruch 1, dadurch gekennzeichnet, daß der Abschlußwiderstand (RA) des Empfangszweiges der Vierdrahtleitung zwischen dem Verbindungspunkt der beiden vierdrahtseitigen Wicklungen (w3, w4) des Gabelübertragers (Ue) und einem Erdpotential führenden Schaltungspunkt liegt, und daß die Windungszahl der sendezweigseitigen Gabelübertragerwicklung (W4) größer als diejenige der empfangsseitigen Gabelübertragerwicklung (W3) ist.

4. Anordnung nach einem der Ansprüche 1 – 3, dadurch gekennzeichnet, daß die Vierpolschaltung (VP) zusammen mit dem im Sendezweig der Vierdrahtleitung liegenden Tiefpaß (SF) eine Baueinheit bildet.

**Claims**

1. Arrangement comprising a hybrid circuit for the two-wire/four-wire junction in PCM t.d.m. systems which at the two-wire end is connected to a feed bridge whose resultant resistor (RS) and capacitor (CS) connected in parallel therewith are arranged in series between the two equal sized two-wire-side sub-windings (w1, w2) of the hybrid transformer (Ue) and which are connected to a four-wire line whose receiving arm contains a low-pass filter (EF) having a negligible output impedance and whose transmitting arm contains a low-pass filter (SF) having a high input impedance, where the filters preferably represent the receiving- and transmitting filters of an arrangement for digital-analogue conversion and for analogue-digital conversion, characterised in that the overall inductance (L1,2) of the two-wire-side hybrid transformer windings (w1, w2), the resistance value of the resultant feed bridge resistor (RS) and the capacitance of the feed bridge capacitor (CS) are governed by the equation

$$L1,2 = CS \cdot RS^2$$

that the connection point of the two four-wire-side hybrid transformer windings (w3, w4) is connected either directly or via a real resistance to a circuit point which carries earth potential, that the receiving arm of the four-wire line is terminated by a resistor (RA) whose resistance value is related to that of the feed bridge resistor (RS), to the number of turns of the two-wire-side hybrid transformer windings (w1, w2), to the number of turns of the hybrid transformer winding (w3) located in the receiving arm of the four-wire line and to the resistance (Rw3) of this winding in accordance with

$$RA = RS \cdot (w3/(w1 + w2))^2 - Rw3$$

and that the signal of the low-pass filter (EF) located in the receiving arm of the four-wire line is superimposed with the signal which occurs at the end of the winding (w4) away from the earth potential side and disposed in the transmitting arm of the four-wire line of the hybrid transformer (Ue), in a four-pole circuit which is formed from two resistors (R3, R4) whose first terminals represent the receiving-arm-side and transmitting-arm-side circuit inputs, and from a capacitor (C3) which connects the two other terminals of the resistors, where the other terminal of the resistor (R4) which forms the transmitting-arm-side input forms an output connected to the input of the transmitting-side low-pass filter (SF), as a result of which superimposition an output signal is formed which serves as input signal for the low-pass filter (SF) located in the transmitting arm of the four-wire line, where the components of the four-pole circuit are contrived to be such that under operating conditions the output signal thereof — provided it is formed solely on the basis of the aforementioned signal from the receiving-side low-pass filter (EF) is sufficiently small as to correspond to the required hybrid attenuation, and that the low-pass filters (EF, SF) located in the four-wire line arms are contrived to be such that they compensate the attenuation distortions produced by the hybrid circuit.

2. Arrangement as claimed in claim 1, characterised in that the terminating resistor (RA) of the receiving arm of the four-wire line lies between the output of the receiving-side low-pass filter (EF) and the receiving-side winding (w3) of the hybrid transformer (Ue), and that the two four-wire-side hybrid transformer windings (w3, w4) have an equal number of turns.

3. Arrangement as claimed in claim 1, characterised in that the terminating resistor (RA) of the receiving arm of the four-wire line lies between the connection point of the two four-wire-side windings (w3, w4) of the hybrid transformer and a circuit point which carries earth potential, and that the number of turns of the transmitting-arm-side hybrid transformer winding (w4) is greater than that of the receiving-side hybrid transformer winding (w3).

4. Arrangement as claimed in one of the claims 1 to 3, characterised in that together with the low-pass filter (SF) located in the transmitting arm of the four-wire line, the four-pole circuit (VP) forms one structural unit.

## Revendications

1. Dispositif à termineur pour interconnecter un circuit à deux fils et un circuit à quatre fils dans des systèmes PCM à multiplexage dans le temps, qui est relié, du côté du circuit à deux fils, à un pont d'alimentation dont la résistance ohmique résultante (RS) et le condensateur (CS) monté en parallèle sur celle-ci, sont montés en série entre les deux enroulements partiels (w1, w2), identiques et situés du côté du circuit à deux fils, du termineur (Ue), et qui sont reliés avec un circuit à quatre fils, dans la branche de réception duquel est situé un filtre passe-bas (EF) à impédance de sortie négligeable et dans la branche d'émission duquel est situé un filtre passe-bas (SF) d'impédance d'entrée élevée, les filtres étant de préférence le filtre réception et le filtre émission d'un dispositif pour la conversion numérique-analogique ou analogique-numérique, caractérisé par le fait que l'inductance totale (L1,2) des enroulements (w1, w2) du termineur, qui sont situés du côté du circuit à 2 fils, la valeur ohmique de la résistance résultante (RS) du pont d'alimentation et la capacité du condensateur (CS) du pont d'alimentation, satisfont la relation

$$L1,2 = CS \cdot RS^2$$

que le point de liaison des deux enroulements (w3, w4) du termineur, situés du côté du circuit à quatre fils, sont reliés directement, ou par l'intermédiaire d'une résistance réelle, à un point du circuit porté au potentiel de terre, que la branche de réception du circuit à quatre fils est fermée à l'aide d'une résistance ohmique (RA) dont la valeur ohmique satisfait, avec celle de la résistance (RS) du pont d'alimentation, avec le nombre de spires des enroulements (w1, w2) du termineur, situés du côté du circuit à deux fils, avec le nombre de spires de l'enroulement (w3) du termineur situé dans la branche de réception du circuit à quatre fils, et avec la résistance ohmique (Rw3) de cet enroulement, la relation

$$RA = RS \cdot (w3/(w1+w2))^2 - Rw3$$

et que le signal du filtre passe-bas (EF) qui est situé dans la branche réception du circuit à quatre fils, est superposé au signal qui apparaît à l'extrémité, éloigné du côté qui est au potentiel de terre, de l'enroulement (w4) du transformateur (Ue) du termineur, qui est situé dans la branche émission du circuit à quatre fils, dans un circuit quadripôle constitué par deux résistances ohmiques (R3, R4) et dont des premières bornes représentent les entrées du circuit situées du côté réception et émission respectivement et par un condensateur (C3) qui relie les deux autres bornes des résistances, l'autre borne de la résistance (R4) qui forme l'entrée côté émission constituant une sortie reliée à l'entrée du passe-bas (SF) situé côté émission, pour former un signal de sortie qui sert de signal d'entrée pour le passe-bas (SF) qui est situé dans la branche émission du circuit à quatre fils, les parties constitutives du circuit quadripôle étant dimensionnées de telle façon que dans les conditions de fonctionnement son signal de sortie, dans la mesure où il est uniquement formé sur la base du signal de sortie sus-mentionné est faible en fonction de l'alimentation du termineur, et que les passe-bas (EF, SF) qui sont situés dans la branche du circuit à quatre fils sont dimensionnés de telle façon qu'ils compensent la distorsion amplitude-fréquence due au circuit termineur.

2. Dispositif selon la revendication 1, caractérisé par le fait que la résistance terminale (RA) de la branche réception du circuit à quatre fils est située entre la sortie du passe-bas (EF) située du côté réception et l'enroulement (w3) du termineur (Ue), qui est situé à la sortie du côté réception, et que les deux enroulements (w3, w4) du termineur, situés du côté du circuit à quatre fils, ont le même nombre de spires.

3. Dispositif selon la revendication 1, caractérisé par le fait que la résistance terminale (RA) de la branche réception du circuit à quatre fils est située entre le point de liaison de deux enroulements (w3, w4) du transformateur (Ue) du termineur, situés du côté du circuit à quatre fils et un point du circuit placé au potentiel de terre et que le nombre de spires de l'enroulement (w4) du termineur, qui est situé du côté émission, est supérieur à celui de l'enroulement (w3) du transformateur du termineur, situé du côté récepteur.

4. Dispositif selon l'une des revendications 1 – 3, caractérisé par le fait que le circuit quadripôle (VP) forme, avec le filtre passe-bas situé dans la branche émission du circuit à quatre fils, une unité de construction.

## FIG1

## FIG 2

## FIG 3